# EUROPÄISCHE PATENTSCHRIFT

(11) **EP 1 055 473 B1**
(45) Veröffentlichungstag und Bekanntmachung des Hinweises auf die Patenterteilung: **09.03.2005**
(21) Anmeldenummer: 00107427.7
(22) Anmeldetag: 06.04.2000
(51) Int. Cl.: B23B 31/16

(54) **Spanneinrichtung für Gegenstände, z.B. für zu bearbeitende Werkstücke**
Clamping device for objects e.g. for workpieces to be machined
Dispositif de serrage pour objets p.e. pour pièces à usiner

(30) Priorität: 25.05.1999 DE 19923752
(43) Veröffentlichungstag der Anmeldung: 29.11.2000
(73) Patentinhaber: C. Stiefelmayer GmbH & Co.KG, 73770 Denkendorf (DE)
(72) Erfinder: Denzinger, Otto, 73240 Wendlingen (DE)
(74) Vertreter: Kratzsch, Volkhard, Dipl.-Ing.

(56) Entgegenhaltungen:
- DE-A- 1 912 696
- US-A- 3 101 019
- US-A- 3 630 535
- US-A- 3 860 251

## Beschreibung

Die Erfindung bezieht sich auf eine Spanneinrichtung für Gegenstände, z.B. für zu bearbeitende Werkstücke, der im Oberbegriff des Anspruchs 1 genannten Art.

Eine Spanneinrichtung dieser Art ist bekannt (DE-A-1912696), wobei der Erfindung die Aufgabe zugrunde liegt, eine Spanneinrichtung dieser Art zu schaffen, die besonders einfach und kostengünstig gestaltet ist und nach Wahl gleichermaßen zum Außenspannen wie auch zum Innenspannen geeignet ist.

Die Aufgabe ist bei eine Spanneinrichtung der eingangs genannten Art gemäß der Erfindung durch die Merkmale im Anspruch 1 gelöst. Weitere Erfindungsmerkmale und vorteilhafte Ausgestaltungen ergeben sich aus den daran anschließenden übrigen Ansprüchen.

Durch die Erfindung ist eine Spanneinrichtung geschaffen, die zum Außenspannen und gleichermaßen auch zum Innenspannen geeignet ist und bei entsprechender Anordnung von Außenspannflächen und Innenspannflächen an den Spannbacken als Außen- und Innenspanneinrichtung in einem gleichermaßen nutzbar ist. Die Spanneinrichtung benötigt nur wenige Bauteile, die für die Gestaltung als Außenspanneinrichtung die gleichen wie für diejenige als Innenspanneinrichtung sind, so daß also die Teilevielfalt reduziert ist. Von Vorteil ist ferner, daß die Spanneinrichtung als zentrierendes und insbesondere hydraulisch ausgleichendes Backenfutter gestaltet ist, wobei dieses zumindest zwei Spannbacken hat, je nach Gestaltung aber auch mehrere Spannbacken aufweisen kann, z.B. 3 Spannbacken oder 4, 6, 8, 10, 12 oder je nach Gegebenheiten auch eine ungerade Zahl von Spannbacken. Die Spanneinrichtung hat den Vorteil, daß zunächst bei der Einleitung des Spannvorganges sich einige Spannbacken oder alle sanft an den zu spannenden Gegenstand anlegen mit einhergehender selbsttätiger Zentrierung, bevor dann von den Spannbacken eine gleichmäßige Spannkraft ausgeübt wird. Die Spannbacken können in bekannter Weise einteilig oder zweiteilig oder je nachdem auch mehrteilig gestaltet sein, wobei bei Bedarf auch Pendelbacken zum Einsatz kommen können, bei denen sich die Anzahl der Krafteinleitungsstellen verdoppelt, was zu einem noch schonenderen Einspannen des zu spannenden Gegenstandes führt. Beim Spannen werden auch bei unsymmetrischer Ausgangslage die Spannkräfte symmetrisch aufgebracht, so daß der Gegenstand gleichmäßig eingespannt wird. Die Spanneinrichtung ist kompakt und platzsparend und ermöglicht eine flache Bauweise. Von Vorteil ist ferner, daß mittels der Spanneinrichtung große Spannkräfte übertragbar sind und auch große Spannwege überbrückt werden können. Vorteilhaft ist ferner, daß sich aufgrund der Hebelanordnung der einzelnen Elemente eine Kraftverstärkung ergibt und zumindest teilweise durch Hebelwirkung ein Fliehkraftausgleich erreicht ist. Die Spanneinrichtung hat je nach Spannaufgabe zumindest zwei Spannbacken. Je nach Bedarf kommen auch vier oder mehrere Spannbacken in Betracht, mit Vorteil hierbei jeweils eine gerade Anzahl von Spannbacken, was aber nicht unbedingt zwingend ist. Da die Verstelleinrichtung in der Ausgangsstellung mit einer Offenhaltekraft beaufschlagt ist, gegen die beim Überführen in die Spannstellung gearbeitet wird, ist sichergestellt, daß in der Ausgangslage sämtliche Spannbacken in gleicher Ausgangsposition stehen.

Beim Antasten des zu spannenden Gegenstandes und zunächst erfolgenden Zentrieren ist eine nur geringfügig über der Offenhaltekraft liegende Kraft notwendig, wodurch sich die Spannbacken relativ sanft an den zu spannenden Gegenstand anlegen, bevor über die Beaufschlagung der Spannkolben eine gleichmäßige Spannkraft mittels der Spannbacken auf den Gegenstand ausgeübt wird.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen.

Die Erfindung ist nachfolgend anhand von in den Zeichnungen gezeigten Ausführungsbeispielen näher erläutert. Es zeigen:
- Fig. 1, 2: einen schematischen Schnitt einer Spanneinrichtung zum Außenspannen, wobei Fig. 1 die gelöste Stellung und Fig. 2 die gespannte Stellung darstellen,
- Fig. 3, 4: einen schematischen Schnitt einer Spanneinrichtung zum Innenspannen, wobei Fig. 3 die gelöste Stellung und Fig. 4 die gespannte Stellung darstellen,
- Fig. 5: einen schematischen Schnitt einer Spanneinrichtung zum Außenspannen gemäß einem dritten Ausführungsbeispiel, geschnitten entlang der Linie V - V in Fig. 6 und in der gespannten Stellung dargestellt,
- Fig. 6: eine schematische stirnseitige Ansicht in Pfeilrichtung VI in Fig. 5 lediglich eines Teils der Spanneinrichtung.

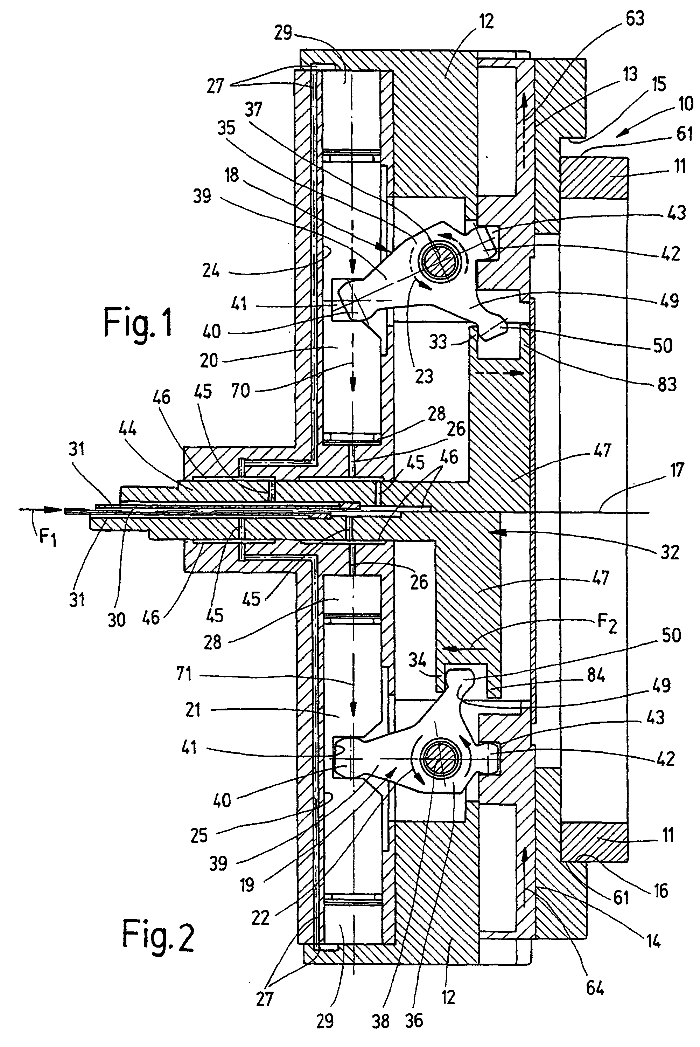

In Fig. 1, 2 ist eine Spanneinrichtung 10 für Gegenstände 11 gezeigt, und zwar in Fig. 1 in der gelösten Stellung und in Fig. 2 in der gespannten Stellung. Der Gegenstand 11 besteht z.B. aus einem zu bearbeitenden Werkstück, wobei es sich um die verschiedensten Arten und Formen von Gegenständen handeln kann. Die Spanneinrichtung 10 weist ein nur schematisch dargestelltes Gehäuse 12 auf, das der besseren Übersicht wegen relativ vereinfacht dargestellt ist. Bei dem Gehäuse 12 handelt es sich z.B. um ein rotationssymmetrisches Gebilde, was jedoch nicht zwingend ist. Die Spanneinrichtung 10 weist mindestens zwei Spannbacken 13 und 14 auf, die ebenfalls vereinfacht dargestellt sind und z.B. einteilig, zweiteilig oder mehrteilig gestaltet sein können. Z.B. kann jeder Spannbacken 13, 14 aus einem Grundbacken und einem Futterbacken bestehen, die über einen Zapfen miteinander gekoppelt sind (EP 800 884 A2). Jeder Spannbacken 13, 14 weist bei der dargestellten Ausbildung der Spanneinrichtung 10 zum Außenspannen eine innere Spannfläche 15 bzw. 16 auf. Die mindestens zwei Spannbacken 13, 14 sind, bezogen auf die Längsmittelachse 17 des Gehäuses 12, radial verschiebbar geführt, was mittels nicht weiter hervorgehobener Führungsflächen am Gehäuse 12 geschieht. Statt der mindestens zwei Spannbacken 13, 14 können auch mehrere Spannbacken dieser Art vorgesehen sein, z.B. drei Spannbacken oder auch vier oder sechs oder acht oder zehn oder zwölf Spannbacken oder auch eine andere ungerade Anzahl dieser. Die Spanneinrichtung 10 bildet in der gezeigten Gestaltung ein zentrierendes und ausgleichendes Mehrbackenfutter.

Jedem Spannbacken 13, 14 ist zu deren Betätigung jeweils ein bewegbares Betätigungselement 18 bzw. 19 zugeordnet. Jedes Betätigungselement 18, 19 ist zumindest in einer Arbeitsrichtung von einem zugeordneten Spannkolben 20 bzw. 21 beaufschlagbar, mit dem das Betätigungselement 18 bzw. 19 zumindest in dieser einen Arbeitsrichtung in Wirkverbindung steht. Die genannte, zumindest eine Arbeitsrichtung ist in Fig. 2 mit einem Pfeil 22 beim Betätigungselement 19 angedeutet. Jeder Spannkolben 20, 21 ist in einem zugeordneten Zylinderraum 24 bzw. 25 des Gehäuses 12 verschiebbar und zumindest zum Spannen der zugeordneten Spannbacken 13 bzw. 14 von einem unter Druck setzbaren Druckmittel beaufschlagbar, das auf einer Kolbenseite im Zylinderraum 24 bzw. 25 wirksam ist. Für die Zuleitung und Ableitung des Druckmittels ist je Zylinderraum 24, 25 ein Kanal 26 und 27 im Gehäuse 12 vorgesehen, von denen der Kanal 26 in den ersten Raum 28 und der andere Kanal 27 in den zweiten Raum 29 mündet. Der erste Raum 28 ist im Zylinderraum 24, 25 auf der radial nach innen weisenden Stirnseite des Spannkolbens 20, 21 gebildet, während der zweite Raum 29 auf der gegenüberliegenden, radial nach außen weisenden Stirnseite des Spannkolbens 20, 21 im Zylinderraum 24, 25 gebildet ist. Jeder Spannkolben 20, 21 ist in beiden Richtungen wirksam und somit wahlweise auf beiden Stirnseiten mit Druckmittel beaufschlagbar. Bei einem anderen, nicht gezeigten Ausführungsbeispiel hingegen ist jeder Spannkolben 20, 21 nur in einer Richtung mit Druckmittel beaufschlagbar, und zwar in der Richtung, die dem Spannen der Spannbacken 13, 14 zugeordnet ist. Die Kanäle 26, 27 sind über zentrale Leitungen 30, 31 an eine nicht weiter gezeigte äußere Druckmittelquelle bzw. Druckmittelsenke angeschlossen. Die Leitungen 30, 31 verlaufen hier zentral und etwa im Bereich der Längsmittelachse 17. Bei einem anderen, nicht gezeigten Ausführungsbeispiel können die Leitungen 30, 31 statt dessen auch im Gehäuse 12 verlaufen.

Im Gehäuse 12 ist mindestens eine zentrale Verstelleinrichtung 32 axial verschiebbar angeordnet, die auf zumindest zwei Betätigungselemente 18, 19 einwirkt und je Betätigungselement 18, 19 einen Anschlag 33, 34 aufweist, an dem das jeweils zugeordnete Betätigungselement 18, 19 anschlagen kann, wie dies in Fig. 1 und 2 angedeutet ist.

Das jeweilige Betätigungselement 18, 19 ist in besonderer Gestaltung als Winkelhebel 35, 36 ausgebildet, der im Gehäuse 12 um jeweils eine Achse 37, 38 schwenkbar gehalten ist und einerseits am zugeordneten Spannkolben 20 bzw. 21 und andererseits am zugeordneten Spannbacken 13 bzw. 14 angreift.

Die Kolben 20, 21, die Spannbacken 13, 14 und die Betätigungselemente 18, 19 in Form eines jeweiligen Winkelhebels 35, 36 sind jeweils gleiche Bauteile. Der jeweilige Winkelhebel 35, 36 weist einen abstehenden ersten Schenkel 39 auf, der etwa quer zum zugeordneten Spannkolben 20, 21 gerichtet ist und mit letzterem gelenkig in Verbindung steht. Der erste Schenkel 39 hat einen als Kugelabschnitt 40 ausgebildeten Endabschnitt, der in eine Ausnehmung 41 des jeweils zugeordneten Spannkolbens 20 bzw. 21 eingreift. Die Ausnehmung 41 ist als dem Kugelabschnitt 40 angepaßter Schlitz, angepaßte Bohrung od. dgl. ausgebildet. Bei dieser Gestaltung steht somit der erste Schenkel 39 des jeweiligen Winkelhebels 35, 36 in beiden Wirkungsrichtungen des zugeordneten Spannkolbens 20, 21 mit diesem gelenkig in Verbindung.

Jeder Winkelhebel 35, 36 weist ferner einen vorzugsweise als Kugelabschnitt ausgebildeten Mitnehmer 42 auf, der etwa quer zum zugeordneten Spannbacken 13, 14 absteht und mit diesem vorzugsweise in beiden Wirkungsrichtungen des Spannbackens 13, 14 gelenkig in Verbindung steht. Hierzu weist jeder Spannbacken 13, 14 eine Ausnehmung 43 auf, die als an den kugeligen Mitnehmer 42 angepaßter Schlitz, angepaßte Bohrung od. dgl. ausgebildet ist und in die der Mitnehmer 42 mit seinem Kugelabschnitt beweglich eingreift. Der Mitnehmer 42 liegt dem ersten Schenkel 39 des jeweiligen Winkelhebels 35, 36 etwa diametral gegenüber. Aufgrund dieser Gestaltung des jeweiligen Winkelhebels 35, 36 und der gelenkigen Verbindung einerseits mit dem zugeordneten Spannkolben 20, 21 und andererseits mit dem zugeordneten Spannbacken 13, 14 ist zumindest in gewissem Ausmaß ein Fliehkraftausgleich geschaffen, da die auf z.B. einen Spannbacken 13, 14 im Sinne einer Beaufschlagung radial nach außen bei Rotation der Spanneinrichtung 10 einwirkende Fliehkraft bei Massengleichheit kompensiert wird durch die in gleicher Richtung auf den jeweils zugeordneten Spannkolben 20, 21 wirkende Fliehkraft. Mit zusätzlicher Massenanhäufung bzw. schwererem bzw. leichterem Material kann der Fliehkraftausgleich noch gesteigert werden.

Ersichtlich ist der jeweilige Zylinderraum 24, 25 und der darin verschiebbare Spannkolben 20, 21, bezogen auf die Längsmittelachse 17 des Gehäuses 12, im wesentlichen radial ausgerichtet und dabei etwa parallel zur radialen Wirkungsrichtung des jeweils zugeordneten Spannbackens 13 bzw. 14 angeordnet. Statt dessen ist auch ein leichter Schrägverlauf gegenüber der Radialen möglich, z.B. um Gegenstände teilweise auch gegen das Gehäuse 12 zu drücken. Die Achse 37, 38, um die der jeweilige Winkelhebel 35 bzw. 36 schwenkbar ist, verläuft quer zur radialen Wirkungsrichtung des jeweils zugeordneten Spannbackens 13 bzw. 14. Zur Lagerung dient ein Bolzen, der im Gehäuse 12 befestigt ist.

Jeder Winkelhebel 35, 36 weist ferner einen zweiten abstehenden Schenkel 49 auf, der in Schwenkrichtung des jeweiligen Winkelhebels 35, 36 in Umfangswinkelabstand vom ersten Schenkel 39 angeordnet ist und zumindest mit dem einen Anschlag 33, 34 der Verstelleinrichtung 32 zusammenarbeiten kann. Der Umfangswinkelabstand kann mehr als 90° Umfangswinkel betragen. Der zweite Schenkel 49 weist einen mit einem Kugelabschnitt 50 versehenen Endabschnitt auf, mit dem der zweite Schenkel 49 am Anschlag 33, 34 in Fig. 1 von rechts nach links gesehen anschlagen kann.

Die Verstelleinrichtung 32 weist beim ersten Ausführungsbeispiel gemäß Fig. 1 und 2 zumindest eine im Gehäuse 12 zentral geführte Stange 44 auf, in der die Leitungen 30, 31 verlaufen, von denen für den Anschluß an die Kanäle 26, 27 Querkanäle 45 abgehen, die in Ringnuten 46 münden. Die Verstelleinrichtung 32 weist zumindest einen sich radial erstreckenden Teil 47 auf, der mit der Stange 44 verbunden ist, z.B. damit einstückig ist. Der radiale Teil 47 kann beim Beispiel in Fig. 1 und 2 aus einer Scheibe bzw. einem Kolben gebildet sein. Bei einem anderen, nicht gezeigten Ausführungsbeispiel ist der radiale Teil 47 anders gestaltet, z.B. als radialer Finger, radiales Segment, radial gerichtete Speiche od. dgl. Wie Fig. 1, 2 zeigt, ist der mindestens eine Anschlag 33, 34 der Verstelleinrichtung 32 am sich radial erstreckenden Teil 47 vorgesehen, z.B. damit einstückig.

Der Anschlag 33, 34 ist jeweils aus einem etwa radialen Vorsprung gebildet, der den zweiten Schenkel 49, insbesondere Kugelabschnitt 50, des Winkelhebels 35 bzw. 36 radial übergreift. Bei der Ausbildung des radialen Teils 47 als Scheibe oder Kolben ist der erste Anschlag 33, 34 in besonders einfacher Weise durch einen umlaufenden Ringflansch gebildet.

Die Verstelleinrichtung 32 ist mittels eines nicht weiter gezeigten Antriebes, z.B. eines druckmittelbetriebenen Arbeitszylinders, insbesonderes eines Hydraulikzylinders, entgegen der dem Spannen des Gegenstandes 11 entsprechenden Bewegungsrichtung mit einer durch Pfeil F1 symbolisierten Kraft beaufschlagt, die auf ein Offenhalten der Spannvorrichtung 10 und darauf hinwirkt, daß die Verstelleinrichtung 32 mit ihrem jeweiligen ersten Anschlag 33, 34 gegen den als Kugelabschnitt 50 ausgebildeten Endabschnitt des zweiten Schenkels 49 des Winkelhebels 35, 36 gedrückt ist und daran anliegt, wie dies in Fig. 1 und 2 dargestellt ist.

Jedem Betätigungselement 18, 19 in Gestalt des Winkelhebels 35 bzw. 36, insbesondere Kugelabschnitt 50 des zweiten Schenkel 49, ist ferner ein zweiter Anschlag 83, 84 der Verstelleinrichtung 32 zugeordnet, der - längs der Längsmittelachse 17 betrachtet - in axialem Abstand vom ersten Anschlag 33, 34 angeordnet ist und bei der Gestaltung des radialen Teils 47 z.B. als Scheibe oder Kolben ebenfalls durch einen umlaufenden Flansch als einstückiges Gebilde gebildet sein kann. Auch dieser zweite Anschlag 83, 84 besteht aus einem etwa radialen Vorsprung, der etwa parallel zum ersten Anschlag 33 bzw. 34 verläuft und den zweiten Schenkel 49, insbesondere den Kugelabschnitt 50 dieses, auf der Seite radial übergreift, die dem ersten Anschlag 33, 34 abgewandt ist. Der erste Anschlag 33, 34 und der zweite Anschlag 83, 84 der Verstelleinrichtung 32 verlaufen in einem axialen Abstand voneinander, der größer bemessen ist als das Querschnittsmaß des dazwischen verlaufenden, als Kugelabschnitt 50 gestalteten Endabschnitts des zweiten Schenkels 49. Es ist somit ein gewisses axiales Spiel zwischen dem Kugelabschnitt 50 und den beidseitigen, jeweils etwa ein U formenden Anschlägen 33, 83 bzw. 34, 84 vorhanden.

Die gemäß dem ersten Ausführungsbeispiel in Fig. 1, 2 zum Außenspannen eingerichtete Spanneinrichtung 10 ist mit ihren mindestens zwei Spannbacken 13, 14 für die Einleitung des Spannvorganges radial nach innen in ihre Außenspannstellung bewegbar, wie dies in Fig. 2 für den Spannbacken 14 mit Pfeil 64 verdeutlicht ist. Der jeweilige Winkelhebel 35, 36 ist zum Spannen in einer dem Außenspannen der Spannbacken 13, 14 in Spannrichtung 64 zugeordneten Schwenkrichtung schwenkbar, die lediglich in Fig. 2 beim dortigen Winkelhebel 36 mit Pfeil 22 verdeutlicht ist, der eine Schwenkbewegung um die Achse 38 im Gegenuhrzeigersinn anzeigt. Um das Spannen des jeweiligen Spannbackens 13, 14 einzuleiten, ist der jeweilige Spannkolben 20, 21 im jeweils zugeordneten Zylinderraum 24, 25 in einer Richtung mit Druckmittel beaufschlagbar, die eine Verschiebung des Spannkolbens 20, 21 radial nach außen bewirkt, wie dies lediglich in Fig. 2 für den dortigen Spannkolben 21 gezeigt und durch Pfeil 71 verdeutlicht ist. Hierzu wird Druckmittel, insbesondere Hydraulikflüssigkeit, unter Druck über die Leitung 30, die Querkanäle 45, die Ringnuten 46 und den Kanal 26 in den ersten Raum 28 eingeleitet und somit die in Fig. 2 radial nach innen weisende Stirnseite des Spannkolbens 21 mit Druckmittel beaufschlagt. Dies geschieht ausgehend von der in Fig. 1 gezeigten Ausgangsstellung, die die gelöste Stellung der Spanneinrichtung 10 zeigt, bei der die Spannfläche 15 in radialem Abstand von der Außenfläche 61 des Gegenstandes 11 verläuft und der jeweilige Spannbacken 13 seine äußerste Radialstellung einnimmt. Die Verstelleinrichtung 32 ist dabei mit der Kraft F1, die in Fig. 1, 2 nach rechts gerichtet ist, beaufschlagt, wodurch die Spanneinrichtung 10 in Nichtspannstellung bzw. Offenstellung gehalten ist. Wird Fluiddruck in den ersten Raum 28 eingeleitet, so wird dadurch der Spannkolben, wie für den Spannkolben 21 durch Pfeil 71 verdeutlicht ist, im Zylinderraum 25 radial nach außen bewegt. Dadurch wird der Winkelhebel 36 um die Achse 38 in Pfeilrichtung 22 (Gegenuhrzeigersinn) geschwenkt, wodurch über den Mitnehmer 42 auf den Spannbacken 14 eine in Pfeilrichtung 64 gerichtete Kraft zum Spannen ausgeübt wird. Der zweite Schenkel 49 liegt dabei mit seinem Kugelabschnitt 50 am Anschlag 34 an, wobei auf den Anschlag 34 und somit auf den radialen Teil 47 der Verstelleinrichtung 32 eine der Kraft F1 entgegenwirkende Kraft F2 ausgeübt wird, die größer als F1 sein muß und ist, um die Bewegung in Richtung Spannstellung hervorzurufen. Dies wird durch den entsprechenden Fluiddruck im Raum 28 eingestellt. Die Bewegung des Spannbackens 14 in beschriebener Weise erfolgt so lange, bis dieser mit seiner Spannfläche 16 an der Außenfläche 61 des Gegenstandes 11 anliegt. Dann ist zunächst eine Zentrierung des Gegenstandes 11 zwischen den Spannbacken 13, 14 erreicht. Die Spanneinrichtung 10 bewirkt dabei somit ein radiales Antasten und Heranführen der Spannbacken von außen an die Außenfläche 61 des Gegenstandes 11 so weit, bis der Gegenstand 11 zwischen den Spannbacken 13, 14 und etwaigen weiteren vorhandenen Spannbacken zunächst selbsttätig zentriert ist. Je nach Form des Gegenstandes 11 und angepaßter Gestaltung der Spanneinrichtung 10, insbesondere der Spannbacken, liegen unter Zentrierung des Gegenstandes 11 zuerst nur einige der Spannbacken an der Außenfläche 61 des Gegenstandes 11 an. Diese Spannbacken bewegen sich nun nicht mehr weiter. Die übrigen Spannbacken werden mit dem gleichen Druck nun nacheinander an die Außenfläche 61 angelegt, bis sich alle Spannbacken in Anlage befinden. Zum eigentlichen Spannen des Gegenstandes 11 wird dann ein höherer Fluiddruck, z.B. von 60 bar, zugeführt, der im Raum 28 wirksam ist und dann auf die Spannbacken im Sinne radialer Spannung von außen nach innen einwirkt.

Die Spanneinrichtung 10 hat vielfältige Vorteile. Sie wirkt zentrierend und hat einen hydraulischen Ausgleich. Zur Einleitung des Spannens wird mit einer nur geringen Differenzkraft F2 minus F1 und mit nur relativ geringer Spannkraft in Pfeilrichtung 64 von den Spannbacken 13, 14 auf den zu spannenden Gegenstand 11 eingewirkt, der zunächst selbsttätig zentriert und relativ sanft ohne übermäßige Deformationsgefahr gefaßt wird. Nach dieser Zentrierung erfolgt mit erhöhtem Fluiddruck das Spannen, bei dem die Spannbacken 13, 14 und etwaige weitere Spannbacken keine nennenswerten weiteren radialen Wege zurücklegen müssen. Die Spanneinrichtung 10 ermöglicht große Spannwege und die Übertragung sehr großer Spannkräfte. Durch die beschriebene Gestaltung, insbesondere durch Hebelwirkung, ist eine Kraftverstärkung erreicht. Die Spanneinrichtung 10 hat eine sehr flache Bauform und ist somit platzsparend und kompakt.

Zum Überführen der Spanneinrichtung 10 in die in Fig. 1 gezeigte gelöste Stellung wird der im Raum 28 jeweils wirkende Fluiddruck abgesenkt zumindest so weit, daß F2 zumindest geringfügig kleiner als F1 ist, so daß über die auf die Verstelleinrichtung 32 wirkende Kraft F1 die Verstelleinrichtung 32 in Fig. 2 nach rechts in die Position gemäß Fig. 1 verschoben wird. Gewünschtenfalls kann diese Rückstellung in die Offenstellung noch dadurch unterstützt werden, daß Fluiddruck noch in den jeweiligen Raum 29 geleitet wird und dadurch auf den jeweiligen Spannkolben 20, 21 eine radial nach innen gerichtete Kraft wirkt, die in Fig. 1 mit gestricheltem Pfeil 70 angedeutet ist. Der jeweilige Winkelhebel 35, 36 wird dabei in Richtung des gestrichelt angedeuteten Pfeiles 23 geschwenkt und der jeweilige Spannbacken, wie für den Spannbacken 13 in Fig. 1 angedeutet ist, in Richtung des gestrichelten Pfeils 63 radial nach außen bewegt.

Man erkennt, daß der Abstand zwischen dem ersten Anschlag 33, 34 einerseits und dem zweiten Anschlag 83, 84 andererseits groß genug ist, um beim Schwenken der Winkelhebel 35, 36 in die Schwenkrichtung, die dem Spannen der Spannbacken 13, 14 entspricht, im Hinblick auf das Querschnittsmaß des Kugelabschnitts 50 des zweiten Schenkels 49 so ausreichend axialen Raum bereitzustellen, daß nach Zentrieranlage des einen oder anderen der vorhandenen Spannbacken etwaige weitere Spannbacken noch weiter in Spannrichtung beaufschlagt werden und durch weitere Schwenkung der Winkelhebel 35, 36 in der Arbeitsrichtung gemäß Pfeil 22 in Spannrichtung gemäß Pfeil 64 bewegt werden können, wobei durch die Anlage des Kugelabschnitts 50 am Anschlag 33, 34 die Verstelleinrichtung 32 axial weiter gegen die Kraft F2 in Fig. 1 und 2 nach links verschoben wird, während die anderen Winkelhebel nicht mehr schwenken, deren Spannbacken bereits in Zentrieranlage mit dem Gegenstand 11 stehen.

Man erkennt ferner, daß bei Druckbeaufschlagung der Spannkolben, wie dies nur in Fig. 2 für den Spannkolben 21 gezeigt ist, durch in den Raum 28 eingeleitetes Druckfluid der Winkelhebel 36 über seinen ersten Schenkel 39 vom Spannkolben 21 mitgenommen und in einer dem Spannen entsprechenden Schwenkrichtung gemäß Pfeil 22 geschwenkt wird mit einhergehender Beaufschlagung des zugeordneten Spannbackens 14 über den Mitnehmer 42 in Spannrichtung und mit einer Spannkraft, wobei der als Kugelabschnitt 50 ausgebildete Endabschnitt des zweiten Schenkels 49 am Anschlag 34 der Verstelleinrichtung 32 anliegt und über diese Anlageberührung die Verstelleinrichtung 32 entgegen der darauf in Offenhalterichtung wirkenden Offenhaltekraft F1 auch dann noch weiter mitschleppt, wenn nach erreichter Zentrierung des zu spannenden Gegenstandes 11 ein oder mehrere Spannbacken und über diese die jenen zugeordneten Winkelhebel ohne weitere Bewegung in ihrer Position verharren.

Die durch Druckbeaufschlagung des jeweiligen Spannkolbens, in Fig. 2 des Spannkolbens 21, durch Einleiten von Druckfluid in den Raum 28 in der Richtung gemäß Pfeil 71 erzeugte Kraft hat durch die Anlage des Kugelabschnitts 50 am Anschlag 34 der Verstelleinrichtung 32 eine der Offenhaltekraft F1 entgegenwirkende Kraft F2 zur Folge, wobei F2 nur geringfügig größer als F1 zu sein braucht. Die Differenzkraft F2 minus F1 ist die zur Anlage wirksame Kraft, zumindest zum Erreichen einer selbsttätigen hydraulischen Zentrierung des zwischen den Spannbacken gefaßten Gegenstandes 11, was somit ein sanftes Erfassen des Gegenstandes zur Folge hat.

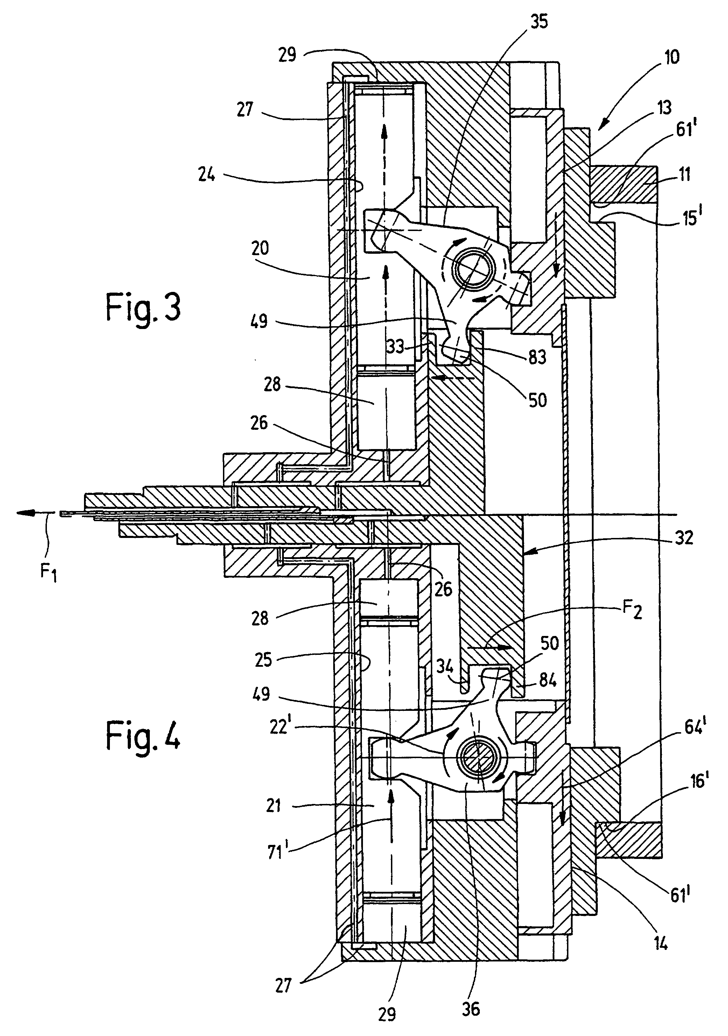

Die in Fig. 3 und 4 gezeigte Spanneinrichtung entspricht praktisch unverändert derjenigen in Fig. 1 und 2, allein mit dem Unterschied, daß die Spanneinrichtung in Fig. 3 und 4 zum Innenspannen ausgebildet ist, wobei somit die Spannbacken 13, 14 mit äußeren Spannflächen 15' bzw. 16' versehen sind, die zum Innenspannen an der Innenfläche 61' des Gegenstandes 11 angreifen können. Hierbei sind somit die Spannbacken 13, 14 radial von innen nach außen in ihre Innenspannstellung bewegbar, die in Fig. 4 gezeigt ist, bzw. gegensinnig radial von außen nach innen in die in Fig. 3 gezeigte nicht gespannte Stellung bewegbar. Die Verstelleinrichtung 32 ist mittels eines nicht gezeigten Antriebes, z.B. eines druckmittelbetriebenen Arbeitszylinders, entgegen der dem Spannen entsprechenden Bewegungsrichtung, in Fig. 3 und 4 somit von rechts nach links, mit der Kraft F1 beaufschlagt, die auf ein Offenhalten der Spanneinrichtung 10 und darauf hinwirkt, daß die Verstelleinrichtung 32 mit dem anderen Anschlag 83 bzw. 84 gegen den als Kugelabschnitt 50 ausgebildeten Endabschnitt des zweiten Schenkels 49 des Winkelhebels 35, 36 gedrückt ist und daran anliegt. Zum Spannen wird dem Raum 29 Druckfluid zugeführt und somit die radial nach außen weisende Stirnfläche des Spannkolbens 20, 21 mit Druckfluid beaufschlagt, so daß der jeweilige Spannkolben, wie in Fig. 4 für den Spannkolben 21 gezeigt ist, in Richtung des Pfeiles 71' bewegt wird und dies eine Schwenkbetätigung des in Fig. 4 gezeigten Winkelhebels 36 in Richtung des Pfeiles 22' im Uhrzeigersinn zur Folge hat, die in Pfeilrichtung 64' eine Radialverschiebung des in Fig. 4 gezeigten Spannbackens 14 radial von innen nach außen und in die Spannstellung zur Folge hat. Durch die Anlage des Kugelabschnitts 50 des zweiten Schenkels 49 am Anschlag 84 wird auf die Verstelleinrichtung 32 die in Fig. 4 nach rechts gerichtete Kraft F2 ausgeübt, die der Offenhaltekraft F1 entgegengerichtet und zumindest geringfügig größer als diese ist, so daß die Spannbacken, wie der Spannbacken 14, nur mit einer der relativ niedrigen Differenzkraft entsprechenden radialen Kraft beaufschlagt werden und dementsprechend der Gegenstand 11 beim zunächst erfolgenden Zentrieren relativ sanft radial von innen nach außen angefahren wird.

Soll die Spanneinrichtung 10 gemäß Fig. 3 und 4 von der Spannstellung gemäß Fig. 4 wieder zurück in die Öffnungsstellung gemäß Fig. 3 überführt werden, so wird der Druck im Raum 29 reduziert, z.B. so weit, bis die Kraft F2 kleiner als die Offenhaltekraft F1 ist und somit über die mit der Kraft F1 beaufschlagte Verstelleinrichtung 32 die Rückstellung in die Ausgangsstellung gemäß Fig. 3 geschieht. Die Rückstellung kann auch hier durch Einleiten von Druckfluid in den Raum 28 noch unterstützt werden.

Beim ersten Ausführungsbeispiel in Fig. 1 und 2 ist die Spanneinrichtung 10 nur zum Außenspannen eingerichtet, während beim zweiten Ausführungsbeispiel in Fig. 3 und 4 die dortige Spanneinrichtung 10, die praktisch derjenigen in Fig. 1 und 2 identisch ist, nur zum Innenspannen eingerichtet ist.

Bei einem anderen, nicht gezeigten Ausführungsbeispiel sind die Spannbacken 13, 14 sowohl mit einer inneren Spannfläche 15, 16 als auch mit einer äußeren Spannfläche 15', 16' versehen, so daß die Spanneinrichtung 10 sowohl zum Außenspannen als auch, lediglich mit umgekehrter Arbeitsrichtung, zum Innenspannen geeignet ist und verwendet werden kann. Der jeweilige Spannkolben 20, 21 ist im jeweils zugeordneten Zylinderraum 24, 25 in beiden Richtungen mit Druckmittel beaufschlagbar, um entweder ein Innenspannen oder ein Außenspannen zu bewirken. Der jeweilige Winkelhebel 35, 36 ist in einer dem Außenspannen zugeordneten Schwenkrichtung und/oder in einer dazu gegensinnigen, dem Innenspannen zugeordneten Schwenkrichtung schwenkbar. Die mindestens eine Verstelleinrichtung 32 ist in einer dem Außenspannen zugeordneten Verschieberichtung, die in Fig. 1 und 2 von rechts nach links gerichtet ist, und/oder in einer dazu gegensinnigen, dem Innenspannen zugeordneten Verschieberichtung, die in Fig. 3, 4 von links nach rechts gerichtet ist, verschiebbar, und dies jeweils gegen die Wirkung der entsprechend entgegengerichteten Offenhaltekraft F1, die in Fig. 1, 2 von links nach rechts wirksam ist, während diese in Fig. 3, 4 von rechts nach links wirksam ist.

Beim ersten Ausführungsbeispiel gemäß Fig. 1, 2 und beim zweiten Ausführungsbeispiel gemäß Fig. 3, 4 hat die jeweilige Spanneinrichtung 10 eine einzige Kranzreihe von Spannbacken 13, 14 mit zugeordneten Spannkolben 20, 21 und Winkelhebeln 35, 36 sowie Spannbacken 13, 14.

Bei einem anderen, nicht gezeigten Ausführungsbeispiel sind statt dessen zwei oder mehrere axial beabstandete Kranzreihen von derartigen Spannkolben 20, 21 mit Winkelhebeln 35, 36 und zugeordneten Anschlägen 33, 34, 83, 84 der Verstelleinrichtung 32 vorgesehen, denen zur Betätigung entsprechend zwei oder mehrere axial beabstandete Kranzreihen entsprechender Spannbacken 13, 14 zugeordnet sind.

Bei einem anderen, nicht gezeigten Ausführungsbeispiel sind die einzelnen Zylinderräume 24,25 nicht radial, sondern im wesentlichen achsparallel zur Längsmittelachse 17 angeordnet. In entsprechender Zuordnung sind die einzelnen Spannkolben 20,21 dann ebenfalls im wesentlichen parallel zur Längsmittelachse 17 angeordnet und verschiebbar, wobei die Ankopplung an das jeweilige Betätigungselement 18,19, insbesondere den Winkelhebel 35,36,im Bereich eines Stirnendes des jeweiligen Spannkolbens geschehen kann, z.B. des Stimendes, das der Radialebene zugewandt ist, innerhalb der im wesentlichen die Spannbacken 13,14 bei gleicher Anordnung wie in Fig. 1 bis 4 verschiebbar sind. Der jeweilige Winkelhebel 35,36 ist bei diesem nicht gezeigten Ausführungsbeispiel in Anpassung an die etwa achsparallele Anordnung der Spannkolben 20,21 modifiziert, z.B. derart, daß der in Fig. 1 bis 4 gezeigte erste Schenkel 39 sich an anderer Stelle erstreckt und hierbei z.B. etwa unter einem Winkel von 90° zu dem den Mitnehmer 42 tragenden Schenkel ausgerichtet ist. Dabei kann der in Fig. 1 bis 4 gezeigte zweite Schenkel 49 mit dem genannten ersten Schenkel 39 zu einem Teil vereinigt sein, das mit einem z.B. etwa halbkugelförmig überstehenden einen Vorsprung, ähnlich dem halben Kugelabschnitt 50, an einem Anschlag 83, 84 der Verstelleinrichtung 32 anliegt und mit einem diesem gegenüberliegenden Flächenbereich axial am jeweils etwa achsparallel angeordneten Spannkolben 20,21 anliegt, wobei diese Anlage bei der Axialbewegung des jeweiligen Spannkolbens und der dadurch erfolgenden Schwenkbetätigung des jeweiligen Winkelhebels eine Relativbewegung zwischen dem Ende des Spannkolbens 20,21 einerseits und dem daran anliegenden Bereich des Winkelhebels 35,36 andererseits ermöglicht. Es versteht sich, daß auch anders gestaltete Ankopplungen des Winkelhebels sowohl an die Verstelleinrichtung als auch an das zugewandte Ende der jeweils etwa achsparallel angeordneten Spannkolben im Rahmen der Erfindung liegen.

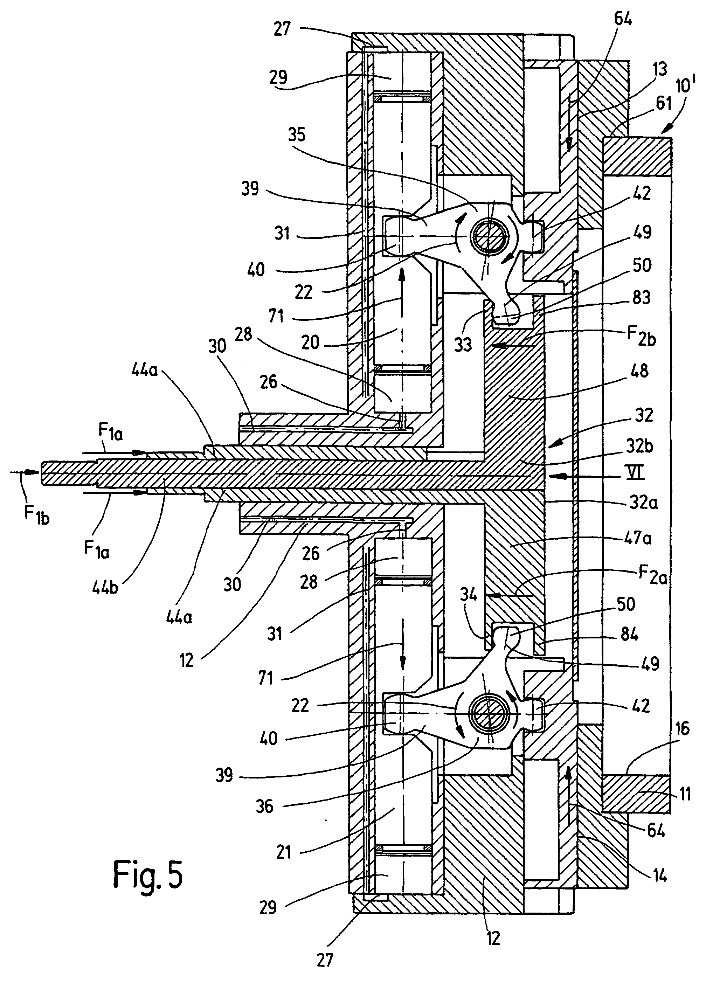

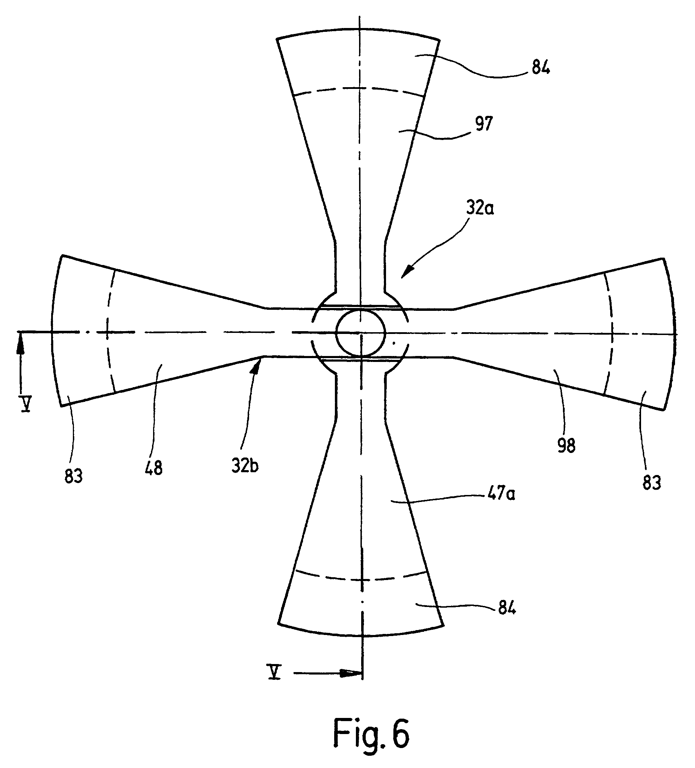

Bei dem in Fig. 5 und 6 gezeigten dritten Ausführungsbeispiel ist die Verstelleinrichtung 32 in zumindest zwei, bedarfsweise unabhängig voneinander betätigbare, Gruppen 32a, 32b unterteilt. Die eine Gruppe 32a weist eine innen hohle Stange 44a und ferner mindestens einen sich radial erstreckenden Teil, beim gezeigten Ausführungsbeispiel zwei einander diametral gegenüberliegende, sich radial erstreckende Teile 47a, 97 auf, die hier als etwa radiale Arme gestaltet sind und jeweils analog den vorangehenden Ausführungsbeispielen mit Anschlägen versehen sind, von denen in Fig. 5 beim radialen Teil 47a die Anschläge 34 und 84 sichtbar sind. Die zweite Gruppe 32b weist eine innerhalb der hohlen Stange 44a z.B. verschiebbar geführte Stange 44b und an dieser einen oder mehrere sich radial erstreckende Teile auf, beim gezeigten Ausführungsbeispiel zwei sich radial erstreckende Teile 48, 98, die einander diametral gegenüberliegen und etwa als radiale Arme gestaltet sind. Auch diese weisen analog dem ersten und zweiten Ausführungsbeispiel Anschläge auf, die in Fig. 5 lediglich beim radialen Teil 48 sichtbar und mit 33, 83 angedeutet sind. Die einzelnen radialen Teile 47a, 97 sowie 48, 98 befinden sich im wesentlichen innerhalb einer gemeinsamen Radialebene. Dies gilt ferner sowohl für die Anschläge 83, 84 als auch für die Anschläge 33, 34. Die eine Gruppe 32a der Verstelleinrichtung ist in Fig. 5 von links nach rechts mit einer Kraft F1a beaufschlagt, die im Sinne einer Offenhaltung der beiden diesen radialen Teilen 47a, 97 zugeordneten Spannbacken wirksam ist, von denen in Fig. 5 lediglich der eine Spannbacken 14 sichtbar ist, der dem radialen Teil 47a der ersten Gruppe 32a der Verstelleinrichtung 32 zugeordnet ist. Die zweite Gruppe 32b der Verstelleinrichtung 32 ist mit einer Kraft F1b beaufschlagt, die in gleicher Richtung wie F1a wirksam ist und ebenfalls auf ein Offenhalten der diesen radialen Teilen 48, 98 zugeordneten Spannbacken hinwirkt, von denen in Fig. 5 lediglich ein Spannbacken 13 zu sehen ist.

Aus Fig. 5 und 6 wird deutlich, daß zwei Verstelleinrichtungen 32a, 32b vorgesehen sind. Der Verstelleinrichtung 32a sind entsprechend den einander diametral gegenüberliegenden radialen Teilen 47a, 97 zwei einander diametral gegenüberliegende Spannbacken sowie zwei einander etwa diametral gegenüberliegende Spannkolben und jeweils zugeordnete Betätigungselemente in Form jeweils eines Winkelhebels analog den vorangegangenen Ausführungsbeispielen zugeordnet, wobei eine Druckbeaufschlagung der Spannkolben radial von außen nach innen ein Außenspannen in Pfeilrichtung 64 des Gegenstandes 11 zur Folge hat.

Der zweiten Verstelleinrichtung 32b mit den einander diametral gegenüberliegenden radialen Teilen 48, 98 sind ebenfalls zwei einander diametral gegenüberliegende Spannbacken sowie entsprechende Spannkolben und zwei Betätigungselemente in Form von Winkelhebeln zugeordnet, wobei bei Druckbeaufschlagung der Spannkolben in Spannrichtung mittels der zugeordneten Spannbacken ebenfalls ein Zentrieren bzw. Spannen des Gegenstandes 11 radial von außen nach innen erfolgt. Beim Spannen wird jeweils eine Kraft F2a bzw. F2b wirksam, die der Offenhaltekraft F1a bzw. F1b entgegengerichtet ist und im Vergleich zu dieser zumindest geringfügig größer ist, wobei der Gegenstand 11 mit der Differenzkraft zentriert bzw. gespannt werden kann. Es versteht sich, daß die beiden Verstelleinrichtungen 32a einerseits und 32b andererseits entweder gleichzeitig oder bei Bedarf auch voneinander unabhängig im Spannsinn bzw. Lösensinne betätigt werden können. Es versteht sich ferner, daß die Spanneinrichtung 10' in Fig. 5 und 6 statt zum Außenspannen, wie gezeigt, oder zusätzlich dazu auch zum Innenspannen ausgebildet sein kann.

Fig. 5 zeigt, daß abweichend von den vorangehenden Ausführungsbeispielen die Leitungen 30, 31 für die Zufuhr bzw. Abfuhr des Fluids im Gehäuse 12 enthalten sind oder statt dessen auch außerhalb des Gehäuses 12 verlaufen können.

Zur Vermeidung unnötiger Wiederholungen sind im übrigen beim dritten Ausführungsbeispiel in Fig. 5 und 6 für die Teile, die den vorangehenden Ausführungsbeispielen entsprechen, gleiche Bezugszeichen verwendet, so daß damit auf die Beschreibung dieser vorangehenden Ausführungsbeispiele Bezug genommen ist.

## Patentansprüche

1. Spanneinrichtung für Gegenstände (11), z.B. für zu bearbeitende Werkstücke, die ein Gehäuse (12) mit mindestens zwei bezogen auf dessen Längsmittelachse (17) radial verschiebbar geführten Spannbacken (13, 14) aufweist, denen zu deren Betätigung jeweils ein bewegbares Betätigungselement (18, 19) zugeordnet ist, das von einem in einem Zylinderraum verschiebbaren und zumindest zum Spannen der Spannbacken (13, 14) von einem unter Druck setzbaren Druckmittel beaufschlagbaren Spannkolben zumindest in einer Arbeitsrichtung beaufschlagbar ist, mit dem das Betätigungselement (18, 19) zumindest in dieser einen Arbeitsrichtung in Wirkverbindung steht, wobei im Gehäuse (12) mindestens eine zentrale, auf zumindest zwei Betätigungselemente (18, 19) einwirkende Verstelleinrichtung (32) verschiebbar angeordnet ist, die je Betätigungselement (18, 19) einen Anschlag aufweist, an dem das jeweils zugeordnete Betätigungselement (18, 19) anschlagen kann, und wobei das jeweilige Betätigungselement (18, 19) als Winkelhebel (35, 36) ausgebildet ist, der im Gehäuse (12) schwenkbar gehalten ist und einerseits am Spannkolben und andererseits am zugeordneten Spannbacken (13,14) angreift und einen abstehenden ersten Schenkel (39), der etwa quer zum Spannkolben gerichtet ist und mit dem Spannkolben gelenkig in Ver bindung steht, sowie einen Mitnehmer (42) aufweist, der etwa quer zum zugeordneten Spannbacken (13,14) absteht und mit diesem gelenkig in Verbindung steht,
**dadurch gekennzeichnet,**
**dass** für jeden Winkelhebel (35,36) ein diesem jeweils zugeordneter Spannkolben (20,21) in einem zugeordneten, im Gehäuse (12) enthaltenen Zylinderraum (24,25) vorgesehen ist, dass der Mitnehmer (42) des Winkelhebels (35,36) dem ersten Schenkel (39) dieses etwa diametral gegenüberliegt und dass der jeweilige Zylinderraum (24,25) und der darin verschiebbare Spannkolben (20,21 ), bezogen auf die längsmittelachse (17) des Gehäuses (12), etwa radial ausgerichtet sind.

2. Spanneinrichtung nach Anspruch 1,
**dadurch gekennzeichnet,**
**daß** der jeweilige Winkelhebel (35, 36) mit einem Endabschnitt des ersten Schenkels (39) in eine Ausnehmung {41) des jeweils zugeordneten Spannkolbens (20, 21)eingreift und in zwei Wirkungsrichtungen des Spannkolbens (20,21} mit diesem gelenkig in Wirkverbindung steht, wobei der jeweilige Spannkolben (20,21 ) zumindest zum Spannen der Spannbacken (13,14) vom Druckmittel beaufschlagbar ist.

3. Spanneinrichtung nach Anspruch 2,
**dadurch gekennzeichnet,**
**daß** der Endabschnitt des ersten Schenkels (39) als Kugelabschnitt (40) ausgebildet ist.

4. Spanneinrichtung nach Anspruch 2 oder 3,
**dadurch gekennzeichnet,**
**daß** die Ausnehmung (41) des Spannkolbens (20, 21) als dem Kugelabschnitt (40) des ersten Schenkels (39) angepaßter Schlitz, angepaßte Bohrung od. dgl. ausgebildet ist.

5. Spanneinrichtung nach Anspruch 1,
**dadurch gekennzeichnet,**
**daß** der Mitnehmer (42) in beiden Wirkungsrichtungen des Spannbackens (13, 14) mit diesem gelenkig in Verbindung steht.

6. Spanneinrichtung nach Anspruch 1 oder 5,
**dadurch gekennzeichnet,**
**daß** der Mitnehmer (42) als Kugelabschnitt ausgebildet ist.

7. Spanneinrichtung nach einem der Ansprüche 1 bis 6,
**dadurch gekennzeichnet,**
**daß** der jeweilige Spannbacken (13, 14) eine Ausnehmung (43) aufweist, in die der Mitnehmer (42) mit seinem Kugelabschnitt beweglich eingreift.

8. Spanneinrichtung nach Anspruch 7,
**dadurch gekennzeichnet,**
**daß** die Ausnehmung (43) des jeweiligen Spannbackens (13, 14) als an den Kugelabschnitt des Mitnehmers (42) angepaßter Schlitz, angepaßte Bohrung od. dgl. ausgebildet ist.

9. Spanneinrichtung nach einem der Ansprüche 1 bis 8,
**dadurch gekennzeichnet, daß** der jeweilige Zylinderraum (24, 25) und der darin verschiebbare Spannkolben (20, 21) etwa parallel zur radialen Wirkungsrichtung des jeweils zugeordneten Spannbackens (13,14) angeordnet sind.

10. Spanneinrichtung nach einem der Ansprüche 1 bis 9,
**dadurch gekennzeichnet,**
**daß** der jeweilige Winkelhebel (35, 36) um eine solche Achse (37, 38) schwenkbar gehalten ist, die quer zur radialen Wirkungsrichtung des jeweils zugeordneten Spannbackens (13,14) verläuft.

11. Spanneinrichtung nach einem der Ansprüche 1 bis 10,
**dadurch gekennzeichnet,**
**daß** der jeweilige Winkelhebel (35, 36) einen zweiten abstehenden Schenkel (49) aufweist, der in Schwenkrichtung des Winkelhebels (35, 36) in Umfangswinkelabstand vom ersten Schenkel (39) angeordnet ist und mit dem jeweiligen Anschlag (33, 34, 83, 84) der Verstelleinrichtung (32, 32a, 32b) zusammenarbeiten kann.

12. Spanneinrichtung nach Anspruch 11,
**dadurch gekennzeichnet,**
**daß** der Umfangswinkelabstand mehr als 90° Umfangswinkel beträgt.

13. Spanneinrichtung nach Anspruch 11 oder 12,
**dadurch gekennzeichnet,**
**daß** der zweite Schenkel (49) des Winkelhebels (35, 36) einen mit einem Kugelabschnitt (50) versehenen Endabschnitt aufweist.

14. Spanneinrichtung nach einem der Ansprüche 1 bis 13,
**dadurch gekennzeichnet,**
**daß** der jeweilige Anschlag (33, 34, 83, 84) der Verstelleinrichtung (32, 32a, 32b) aus jeweils einem etwa radialen Vorsprung gebildet ist, der den zweiten Schenkel (49), insbesondere dessen Endabschnitt, radial übergreift.

15. Spanneinrichtung nach einem der Ansprüche 1 bis 14,
**dadurch gekennzeichnet,**
**daß** die Verstelleinrichtung (32, 32a, 32b) mittels eines Antriebes, z.B. mittels eines druckmittelbetriebenen Arbeitszylinders, entgegen der dem Spannen entsprechenden Bewegungsrichtung mit einer Kraft (F1, F1a, F1b) beaufschlagt ist, die auf ein Offenhalten der Spannvorrichtung (10, 10') und darauf hinwirkt, daß die Verstelleinrichtung (32, 32a, 32b) mit ihrem jeweiligen einen Anschlag (33, 34 bzw. 83, 84) gegen den Endabschnitt des zweiten Schenkels (49) des Winkelhebels (35, 36) gedrückt ist und daran anliegt.

16. Spanneinrichtung nach einem der Ansprüche 1 bis 15,
**dadurch gekennzeichnet,**
**daß** jedem Winkelhebel (35, 36), z.B. jedem abstehenden zweiten Schenkel (49) dieses, ein erster Anschlag (33, 34) und ferner ein zweiter Anschlag (83, 84) der Verstelleinrichtung (32, 32a, 32b) zugeordnet ist, wobei diese beiden Anschläge (33, 34 einerseits und 83, 84 andererseits) in axialem Abstand voneinander angeordnet sind.

17. Spanneinrichtung nach Anspruch 16,
**dadurch gekennzeichnet,**
**daß** jeder Anschlag (33, 34, 83, 84) aus jeweils einem etwa radialen Vorsprung gebildet ist, wobei der eine Anschlag (33, 34) den zweiten Schenkel (49) auf einer Seite und der andere Anschlag (83, 84) den zweiten Schenkel (49) auf der gegenüberliegenden, abgewandten Seite radial übergreift.

18. Spanneinrichtung nach einem der Ansprüche 1 bis 17,
**dadurch gekennzeichnet,**
**daß** der erste Anschlag (33, 34) und der zweite Anschlag (83, 84) der Verstelleinrichtung (32, 32a, 32b) in einem solchen axialen Abstand voneinander verlaufen, der größer bemessen ist als das Querschnittsmaß des dazwischen verlaufenden Endabschnitts, insbesondere Kugelabschnitts (50), des zweiten Schenkels (49) des Winkelhebels (35, 36).

19. Spanneinrichtung nach Anspruch 18,
**dadurch gekennzeichnet,**
**daß** der Abstand zwischen dem ersten Anschlag (33, 34) und dem zweiten Anschlag (83, 84) so groß gewählt ist, daß bei Druckbeaufschlagung des jeweiligen Spannkolbens (20, 21) in einer Arbeitsrichtung (Pfeil 71, 71'), die dem Spannen in Spannrichtung (Pfeil 64, 64') zugeordnet ist, der Winkelhebel (35, 36) über seinen ersten Schenkel (39) vom Spannkolben (20, 21) mitgenommen und in einer dem Spannen entsprechenden ersten Schwenkrichtung (Pfeil 22, 22') geschwenkt wird mit einhergehender Beaufschlagung des jeweils zugeordneten Spannbackens (13, 14) über den Mitnehmer (42) in Spannrichtung (Pfeil 64, 64') und mit einer Spannkraft, wobei der Endabschnitt, insbesondere Kugelabschnitt (50), des zweiten Schenkels (49) an einem Anschlag (33, 34 oder 83, 84) der Verstelleinrichtung (32, 32a, 32b) anliegt und über diese Anlageberührung die Verstelleinrichtung (32, 32a, 32b) entgegen der darauf in Offenhalterichtung wirkenden Offenhaltekraft (F1, F1a, F1b) auch dann noch weiter mitschleppt, wenn nach erreichter Zentrierung des zu spannenden Gegenstandes (11) ein oder mehrere Spannbacken (13, 14) und über diese die zugeordneten Winkelhebel (35, 36) ohne weitere Bewegung in ihrer Position verharren.

20. Spanneinrichtung nach einem der Ansprüche 15 bis 19,
**dadurch gekennzeichnet,**
**daß** die durch Druckbeaufschlagung des jeweiligen Spannkolbens (20, 21) in der einen, dem Spannen in Spannrichtung (Pfeil 64, 64') zugeordneten Richtung (Pfeil 71, 71') erzeugte und auf die Verstelleinrichtung (32, 32a, 32b) entgegen der Offenhaltekraft (F1, F1a, F1b) wirkende Kraft (F2, F2a, F2b) größer als die Offenhaltekraft (F1, F1a, F1b) ist und die Differenzkraft dieser Kräfte zum Spannen in Spannrichtung (Pfeil 64, 64') wirksam ist.

21. Spanneinrichtung nach einem der Ansprüche 1 bis 20,
**dadurch gekennzeichnet,**
**daß** die Verstelleinrichtung (32, 32a, 32b) zumindest eine im Gehäuse (12) zentral geführte Stange (44, 44a, 44b) aufweist.

22. Spanneinrichtung nach einem der Ansprüche 1 bis 21,
**dadurch gekennzeichnet,**
**daß** die Verstelleinrichtung (32, 32a, 32b) zumindest einen sich radial erstreckenden Teil (47, 47a, 97, 48, 98) aufweist, z.B. einen radialen Finger, ein radiales Segment, eine Scheibe, einen Kolben od. dgl.

23. Spanneinrichtung nach einem der Ansprüche 1 bis 22,
**dadurch gekennzeichnet,**
**daß** der mindestens eine Anschlag (33, 34 bzw. 83, 84) der Verstelleinrichtung (32, 32a, 32b) am sich radial erstreckenden Teil (47, 47a, 97, 48, 98) vorgesehen ist.

24. Spanneinrichtung nach einem der Ansprüche 1 bis 23,
**dadurch gekennzeichnet,**
**daß** die Verstelleinrichtung, in Verschieberichtung betrachtet, mehrere axial beabstandete Gruppen von Anschlägen aufweist.

25. Spanneinrichtung nach einem der Ansprüche 1 bis 24,
**dadurch gekennzeichnet,**
**daß** mindestens zwei axial beabstandete Kranzreihen von jeweiligen Spannkolben (20, 21) mit Winkelhebel (35, 36), zugeordneten Anschlägen (33, 34, 83, 84) der Verstelleinrichtung (32, 32a, 32b) und Spannbacken (13, 14) vorgesehen sind.

26. Spanneinrichtung nach einem der Ansprüche 1 bis 25,
**dadurch gekennzeichnet,**
**daß** die Verstelleinrichtung (32) in mindestens zwei voneinander bedarfsweise unabhängig betätigbare einzelne Gruppen (32a, 32b) unterteilt ist.

27. Spanneinrichtung nach Anspruch 26,
**dadurch gekennzeichnet,**
**daß** eine Gruppe (32a) der Verstelleinrichtung eine hohle Stange (44a) mit einem oder mehreren sich radial erstreckenden Teilen (47a, 97) und Anschlägen (33, 34, 83, 84) an diesen aufweist und daß eine zweite Gruppe (32b) eine innerhalb der hohlen Stange (44a) z.B. verschiebbar geführte zweite Stange (44b) mit einem oder mehreren sich radial erstreckenden Teilen (48, 98) und Anschlägen (33, 34, 83, 84) an diesen aufweist, wobei die Anschläge der ersten Gruppe(32a) etwa in der gleichen radialen Ebene wie die Anschläge der zweiten Gruppe (32b) oder in einer dieser gegenüber axial versetzten radialen Ebene verlaufen.

28. Spanneinrichtung nach einem der Ansprüche 1 bis 27,
**dadurch gekennzeichnet,**
**daß** die Spannbacken (13, 14) mit inneren, dem Außenspannen dienenden Spannflächen (15, 16) und/oder mit äußeren, dem Innenspannen dienenden Spannflächen (15', 16') versehen sind und radial nach innen und/oder radial nach außen in ihre jeweilige Außenspannstellung bzw. Innenspannstellung sowie gegensinnig dazu bewegbar sind.

29. Spanneinrichtung nach einem der Ansprüche 1 bis 28,
**dadurch gekennzeichnet,**
**daß** der jeweilige Spannkolben (20, 21) im jeweils zugeordneten Zylinderraum (24, 25) in einer Richtung oder in dazu gegensinniger Richtung oder in beiden Richtungen mit Druckmittel beaufschlagbar ist.

30. Spanneinrichtung nach einem der Ansprüche 1 bis 29,
**dadurch gekennzeichnet,**
**daß** der jeweilige Winkelhebel (35, 36) in einer dem Außenspannen des jeweiligen Spannbackens (13, 14) zugeordneten Schwenkrichtung (Pfeil 22) und/oder in einer dazu gegensinnigen, dem Innenspannen des Spannbackens (13, 14) zugeordneten Schwenkrichtung (Pfeil 22') schwenkbar ist.

31. Spanneinrichtung nach einem der Ansprüche 1 bis 30,
**dadurch gekennzeichnet,**
**daß** die mindestens eine Verstelleinrichtung (32, 32a, 32b) in einer dem Außenspannen der Spannbacken (13, 14) zugeordneten Verschieberichtung und/oder in einer dazu gegensinnigen, dem Innenspannen der Spannbacken (13, 14) zugeordneten Verschieberichtung verschiebbar ist, vorzugsweise jeweils gegen die Wirkung einer auf die Verstelleinrichtung (32, 32a, 32b) einwirkenden Offenhaltekraft (F1, F1a, F1b).

## Claims

1. Clamping device for articles (11), e.g. for workpieces to be machined, which has a housing (12) having at least two clamping jaws (13, 14) which are guided in a radially displaceable manner relative to its longitudinal centre axis (17) and to which a respective movable actuating element (18, 19) is assigned for their actuation, which actuating element (18, 19) can be acted upon at least in one working direction by a clamping piston which is displaceable in a cylinder space and to which a pressure medium which can be pressurized can be applied, at least for clamping the clamping jaws (13, 14), and with which the actuating element (18, 19) is in operative connection at least in this one working direction, at least one central adjusting device (32) which acts on at least two actuating elements (18, 19) being displaceably arranged in the housing (12) and having a stop for each actuating element (18, 19), against which stop the respectively associated actuating element (18, 19) can run, and the respective actuating element (18, 19) being designed as a bell-crank lever (35, 36) which is pivotably held in the housing (12) and acts on the clamping piston on the one hand and on the associated clamping jaw (13, 14) on the other hand and has a projecting first leg (39), which is directed approximately transversely to the clamping piston and is connected to the clamping piston in an articulated manner, and a driver (42) which projects approximately transversely to the associated clamping jaw (13, 14) and is connected to the latter in an articulated manner, **characterized in that**, for each bell-crank lever (35, 36), a clamping piston (20, 21) respectively assigned to said bell-crank lever (35, 36) is provided in an associated cylinder space (24, 25) contained in the housing (12), **in that** the driver (42) of the bell-crank lever (35, 36) is approximately diametrically opposite the first leg (39) of the latter, and **in that** the respective cylinder space (24, 25) and the clamping piston (20, 21) displaceable therein are oriented approximately radially relative to the longitudinal centre axis (17) of the housing (12).

2. Clamping device according to Claim 1, **characterized in that** the respective bell-crank lever (35, 36), with an end section of the first leg (39), engages in a recess (41) of the respectively associated clamping piston (20, 21) and is in operative connection with the clamping piston (20, 21) in an articulated manner in two directions of action of the latter, it being possible for the pressure medium to be applied to the respective clamping piston (20, 21) at least for clamping the clamping jaws (13, 14).

3. Clamping device according to Claim 2, **characterized in that** the end section of the first leg (39) is designed as a spherical segment (40).

4. Clamping device according to Claim 2 or 3, **characterized in that** the recess (41) of the clamping piston (20, 21) is designed as a slot, bore or the like adapted to the spherical segment (40) of the first leg (39).

5. Clamping device according to Claim 1, **characterized in that** the driver (42) is connected to the clamping jaw (13, 14) in an articulated manner in both directions of action of the latter.

6. Clamping device according to Claim 1 or 5, **characterized in that** the driver (42) is designed as a spherical segment.

7. Clamping device according to one of Claims 1 to 6, **characterized in that** the respective clamping jaw (13, 14) has a recess (43) in which the spherical segment of the driver (42) engages in a movable manner.

8. Clamping device according to Claim 7, **characterized in that** the recess (43) of the respective clamping jaw (13, 14) is designed as a slot, bore or the like adapted to the spherical segment of the driver (42).

9. Clamping device according to one of Claims 1 to 8, **characterized in that** the respective cylinder space (24, 25) and the clamping piston (20, 21) displaceable therein are arranged approximately parallel to the radial direction of action of the respectively associated clamping jaw (13, 14).

10. Clamping device according to one of Claims 1 to 9, **characterized in that** the respective bell-crank lever (35, 36) is pivotably held about an axis (37, 38) which runs transversely to the radial direction of action of the respectively associated clamping jaw (13, 14).

11. Clamping device according to one of Claims 1 to 10, **characterized in that** the respective bell-crank lever (35, 36) has a second projecting leg (49) which is arranged at a circumferential angular distance from the first leg (39) in the pivoting direction of the bell-crank lever (35, 36) and can interact with the respective stop (33, 34, 83, 84) of the adjusting device (32, 32a, 32b).

12. Clamping device according to Claim 11, **characterized in that** the circumferential angular distance is more than a 90° circumferential angle.

13. Clamping device according to Claim 11 or 12, **characterized in that** the second leg (49) of the bell-crank lever (35, 36) has an end section provided with a spherical segment (50).

14. Clamping device according to one of Claims 1 to 13, **characterized in that** the respective stop (33, 34, 83, 84) of the adjusting device (32, 32a, 32b) is formed from a respective approximately radial projection which radially overlaps the second leg (49), in particular its end section.

15. Clamping device according to one of Claims 1 to 14, **characterized in that** the adjusting device (32, 32a, 32b), by means of a drive, e.g. by means of a pressure-medium-operated working cylinder, is acted upon against the direction of movement corresponding to the clamping by a force (F1, F1a, F1b) which has the effect of holding the clamping device (10, 10') open and of causing the adjusting device (32, 32a, 32b), with its one respective stop (33, 34 or 83, 84), to be pressed against and to bear on the end section of the second leg (49) of the bell-crank lever (35, 36).

16. Clamping device according to one of Claims 1 to 15, **characterized in that** a first stop (33, 34) and furthermore a second stop (83, 84) of the adjusting device (32, 32a, 32b) are assigned to each bell-crank lever (35, 36), e.g. to each projecting second leg (49) of the latter, these two stops (33, 34 on the one hand and 83, 84 on the other hand) being arranged at an axial distance from one another.

17. Clamping device according to Claim 16, **characterized in that** each stop (33, 34, 83, 84) is formed from a respective approximately radial projection, the one stop (33, 34) radially overlapping the second leg (49) on one side and the other stop (83, 84) radially overlapping the second leg (49) on the opposite, remote side.

18. Clamping device according to one of Claims 1 to 17, **characterized in that** the first stop (33, 34) and the second stop (83, 84) of the adjusting device (32, 32a, 32b) run at an axial distance from one another which is dimensioned to be greater than the cross-sectional size of the end section, in particular the spherical segment (50), of the second leg (49) of the bell-crank lever (35, 36), this end section running in between said stops.

19. Clamping device according to Claim 18, **characterized in that** the distance between the first stop (33, 34) and the second stop (83, 84) is selected to be so large that, when pressure is applied to the respective clamping piston (20, 21) in a working direction (arrow 71, 71') which is assigned to the clamping in the clamping direction (arrow 64, 64'), the bell-crank lever (35, 36) is carried along via its first leg (39) by the clamping piston (20, 21) and is pivoted in a first pivoting direction (arrow 22, 22'), corresponding to the clamping, while in association therewith the respectively associated clamping jaw (13, 14) is acted upon via the driver (42) in the clamping direction (arrow 64, 64') and with a clamping force, in the course of which the end section, in particular the spherical segment (50), of the second leg (49) bears on a stop (33, 34 or 83, 84) of the adjusting device (32, 32a, 32b) and carries the adjusting device (32, 32a, 32b) along still further via this bearing contact against the hold-open force (F1, F1a, F1b), acting thereon in the hold-open direction, even when, after the article (11) to be clamped has been centred, one or more clamping jaws (13, 14) and, via the latter, the associated bell-crank levers (35, 36) remain in their position without further movement.

20. Clamping device according to one of Claims 15 to 19, **characterized in that** the force (F2, F2a, F2b) which is produced by the application of pressure to the respective clamping piston (20, 21) in the one direction (arrow 71, 71') assigned to the clamping in the clamping direction (arrow 64, 64') and acts on the adjusting device (32, 32a, 32b) against the hold-open force (F1, F1a, F1b) is greater than the hold-open force (F1, F1a, F1b), and the differential force of these forces is effective for clamping in the clamping direction (arrow 64, 64').

21. Clamping device according to one of Claims 1 to 20, **characterized in that** the adjusting device (32, 32a, 32b) has at least one rod (44, 44a, 44b) guided centrally in the housing (12).

22. Clamping device according to one of Claims 1 to 21, **characterized in that** the adjusting device (32, 32a, 32b) has at least one radially extending part (47, 47a, 97, 48, 98), e.g. a radial finger, a radial segment, a disc, a piston or the like.

23. Clamping device according to one of Claims 1 to 22, **characterized in that** the at least one stop (33, 34 or 83, 84) of the adjusting device (32, 32a, 32b) is provided on the radially extending part (47, 47a, 97, 48, 98).

24. Clamping device according to one of Claims 1 to 23, **characterized in that** the adjusting device, as viewed in the adjusting direction, has a plurality of axially spaced-apart groups of stops.

25. Clamping device according to one of Claims 1 to 24, **characterized in that** at least two axially spaced-apart ring rows of respective clamping pistons (20, 21) with bell-crank lever (35, 36), associated stops (33, 34, 83, 84) of the adjusting device (32, 32a, 32b) and clamping jaws (13, 14) are provided.

26. Clamping device according to one of Claims 1 to 25, **characterized in that** the adjusting device (32) is subdivided into at least two individual groups (32a, 32b) which can be actuated independently of one another as and when required.

27. Clamping device according to Claim 26, **characterized in that** one group (32a) of the adjusting device has a hollow rod (44a) having one or more radially extending parts (47a, 97) and stops (33, 34, 83, 84) on the latter, and **in that** a second group (32b) has a second rod (44b) guided inside the hollow rod (44a), for example displaceably, and having one or more radially extending parts (48, 98) and stops (33, 34, 83, 84) on the latter, the stops of the first group (32a) running approximately in the same radial plane as the stops of the second group (32b) or in a radial plane axially offset relative to said plane.

28. Clamping device according to one of Claims 1 to 27, **characterized in that** the clamping jaws (13, 14) are provided with inner clamping surfaces (15, 16) used for external clamping and/or with outer clamping surfaces (15', 16') used for internal clamping and can be moved radially inwards and/or radially outwards into their respective external-clamping position or internal-clamping position, respectively, and in the opposite direction thereto.

29. Clamping device according to one of Claims 1 to 28, **characterized in that** pressure medium can be applied to the respective clamping piston (20, 21) in the respectively associated cylinder space (24, 25) in one direction or in the opposite direction thereto or in both directions.

30. Clamping device according to one of Claims 1 to 29, **characterized in that** the respective bell-crank lever (35, 36) can be pivoted in a pivoting direction (arrow 22) assigned to the external clamping of the respective clamping jaw (13, 14) and/or in an opposite pivoting direction thereto (arrow 22') which is assigned to the internal clamping of the clamping jaw (13, 14).

31. Clamping device according to one of Claims 1 to 30, **characterized in that** the at least one adjusting device (32, 32a, 32b) can be displaced in a displacement direction assigned to the external clamping of the clamping jaws (13, 14) and/or in an opposite displacement direction thereto which is assigned to the internal clamping of the clamping jaws (13, 14), preferably in each case against the action of a hold-open force (F1, F1a, F1b) acting on the adjusting device (32, 32a, 32b).

## Revendications

1. Dispositif de serrage pour des objets (11), par exemple des pièces à usiner, qui présente :
un boîtier (12) doté d'au moins deux mâchoires de serrage (13, 14) guidées à coulissement radial par rapport à leur axe longitudinal central (17) et auxquelles un élément mobile d'actionnement (18, 19) respectif est associé en vue de leur actionnement et peut être sollicité au moins dans une direction de travail par un piston de serrage qui peut coulisser dans une chambre cylindrique et qui, au moins pour serrer les mâchoires de serrage (13, 14), peut être sollicité par un fluide sous pression qui peut être placé sous pression et qui coopère avec l'élément d'actionnement (18, 19) au moins dans cette direction de travail,
au moins un dispositif central d'entraînement (32) qui agit sur au moins deux éléments d'actionnement (18, 19) étant disposé à coulissement dans le boîtier (12), chaque élément d'actionnement (18, 19) présentant une butée sur laquelle l'élément d'actionnement (18, 19) respectif peut venir buter, chaque élément d'actionnement (18, 19) étant configuré comme levier coudé (35, 36) qui est maintenu à pivotement dans le boîtier (12) et s'engageant d'une part sur le piston de serrage et d'autre part sur la mâchoire de serrage (13, 14) associée,
un premier bras (39) en saillie qui est orienté sensiblement transversalement par rapport au piston de serrage et qui est relié de manière articulée au piston de serrage,
ainsi qu'un dispositif d'entraînement (42) qui déborde transversalement par rapport à la mâchoire de serrage (13, 14) associée et qui lui est reliée de manière articulée,
**caractérisé en ce que** :
un piston de serrage (20, 21) respectif associé à chaque levier coudé (35, 36) est prévu dans une chambre cylindrique (24, 25) qui lui est associée et qui est contenue dans le boîtier (12),
**en ce que** le dispositif d'entraînement (42) du levier coudé (35, 36) est opposé sensiblement diamétralement au premier bras (39) de ce levier coudé
et **en ce que** chaque chambre cylindrique (24, 25) et le piston de serrage (20, 21) qui peut y coulisser ont une orientation sensiblement radiale par rapport à l'axe longitudinal central (17) du boîtier (12).

2. Dispositif de serrage selon la revendication 1, **caractérisé en ce que** chaque levier coudé (35, 36) s'engage par une partie d'extrémité du premier bras (39) dans une découpe (41) du piston de serrage (20, 21) qui lui est associé et coopère de manière articulée avec le piston de serrage (20, 21) dans les deux directions de travail, chaque piston de serrage (20, 21) pouvant être sollicité par le fluide sous pression au moins en vue de serrer les mâchoires de serrage (13, 14).

3. Dispositif de serrage selon la revendication 2, **caractérisé en ce que** la partie d'extrémité du premier bras (39) est configurée comme partie sphérique (40).

4. Dispositif de serrage selon les revendications 2 ou 3, **caractérisé en ce que** la découpe (41) du piston de serrage (20, 21) a la configuration d'une fente, d'un alésage ou similaires qui sont adaptés à la partie sphérique (40) du premier bras (39).

5. Dispositif de serrage selon la revendication 1, **caractérisé en ce que** le dispositif d'entraînement (42) coopère de manière articulée avec les mâchoires de serrage (13, 14) dans les deux directions de travail de ces dernières.

6. Dispositif de serrage selon les revendications 1 ou 5, **caractérisé en ce que** le dispositif d'entraînement (42) est configuré comme partie sphérique.

7. Dispositif de serrage selon l'une des revendications 1 à 6, **caractérisé en ce que** chaque mâchoire de serrage (13, 14) présente une découpe (43) dans laquelle le dispositif d'entraînement (42) s'engage à déplacement par sa partie sphérique.

8. Dispositif de serrage selon la revendication 7, **caractérisé en ce que** la découpe (43) de chaque mâchoire de serrage (13, 14) a la configuration d'une fente, d'un alésage ou similaires qui sont adaptés à la partie sphérique du dispositif d'entraînement (42).

9. Dispositif de serrage selon l'une des revendications 1 à 8, **caractérisé en ce que** chaque chambre cylindrique (24, 25) et le piston de serrage (20, 21) qui peut y coulisser sont disposés sensiblement parallèlement à la direction d'action de la mâchoire de serrage (13, 14) qui leur est associée.

10. Dispositif de serrage selon l'une des revendications 1 à 9, **caractérisé en ce que** chaque levier coudé (35, 36) est maintenu à pivotement autour d'un axe (37, 38) qui s'étend transversalement par rapport à la direction radiale d'action de la mâchoire de serrage (13, 14) qui lui est associée.

11. Dispositif de serrage selon l'une des revendications 1 à 10, **caractérisé en ce que** chaque levier coudé (35, 36) présente un deuxième bras (49) en saillie qui est disposé à un écart angulaire du premier bras (39) dans la direction de pivotement du levier coudé (35, 36) et qui peut coopérer avec la butée (33, 34, 83, 84) respective du dispositif d'entraînement (32, 32a, 32b).

12. Dispositif de serrage selon la revendication 11, **caractérisé en ce que** l'écart angulaire est un arc de cercle supérieur à 90°.

13. Dispositif de serrage selon les revendications 11 ou 12, **caractérisé en ce que** le deuxième bras (49) du levier coudé (35, 36) présente une partie d'extrémité dotée d'une partie sphérique (50).

14. Dispositif de serrage selon l'une des revendications 1 à 13, **caractérisé en ce que** chaque butée (33, 34, 83, 84) du dispositif d'entraînement (32, 32a, 32b) est formée d'une saillie sensiblement radiale qui chevauche radialement le deuxième bras (49) et en particulier sa partie d'extrémité.

15. Dispositif de serrage selon l'une des revendications 1 à 14, **caractérisé en ce que** le dispositif d'entraînement (32, 32a, 32b) est sollicité dans la direction opposée à la direction de déplacement qui correspond au serrage par la force (F1, F1a, F1b) d'un entraînement, par exemple celle d'un cylindre de travail entraîné par un fluide sous pression, qui agit sur le dispositif de serrage (10, 10') pour le maintenir ouvert et **en ce que** le dispositif d'entraînement (32, 32a, 32b) est repoussé par sa butée (33, 34 ou 83, 84) contre la partie d'extrémité du deuxième bras (49) du levier coudé (35, 36) et repose contre cette partie d'extrémité.

16. Dispositif de serrage selon l'une des revendications 1 à 15, **caractérisé en ce qu'**une première butée (33, 34) et en outre une deuxième butée (83, 84) du dispositif d'entraînement (32, 32a, 32b) sont associées à chaque levier coudé (35, 36) et par exemple à chaque deuxième bras (49) en saillie de ce dernier, ces deux butées (33, 34, d'une part et 83, 84, d'autre part) étant disposées à distance axiale l'une de l'autre.

17. Dispositif de serrage selon la revendication 16, **caractérisé en ce que** chaque butée (33, 34, 83, 84) est formée d'une saillie sensiblement radiale, l'une des butées (33, 34) chevauchant radialement le deuxième bras (49) sur un côté et l'autre butée (83, 84) chevauchant radialement le deuxième bras (49) sur l'autre côté opposé au premier.

18. Dispositif de serrage selon l'une des revendications 1 à 17, **caractérisé en ce que** la première butée (33, 34) et la deuxième butée (83, 84) du dispositif d'entraînement (32, 32a, 32b) s'étendent à un écart axial mutuel qui est plus grand que la dimension de la section transversale de la partie d'extrémité qui s'étend entre elles et en particulier de la partie sphérique (50) du deuxième bras (49) du levier coudé (35, 36).

19. Dispositif de serrage selon la revendication 18, **caractérisé en ce que** l'écart sélectionné entre la première butée (33, 34) et la deuxième butée (83, 84) est suffisant pour que lorsque chaque piston de serrage (20, 21) est sollicité par poussée dans une direction de travail (flèche 71, 71') qui est associée au serrage dans la direction de serrage (flèche 64, 64'), le levier coudé (35, 36) est entraîné par le piston de serrage (20, 21) par l'intermédiaire de son premier bras (39) et est pivoté dans une première direction de pivotement (flèche 22, 22') qui correspond au serrage, en sollicitant ainsi dans la direction de serrage (flèche 64, 64') le piston de serrage (13, 14) qui lui est associé, par l'intermédiaire du dispositif d'entraînement (42) et avec une force de serrage, la partie d'extrémité et en particulier la partie sphérique (50) du deuxième bras (49) venant se placer sur une butée (33, 34 ou 83, 84) du dispositif d'entraînement (32, 32a, 32b) et, du fait de ce contact, le dispositif d'entraînement (32, 32a, 32b) poursuit son entraînement en opposition à la force de maintien de l'ouverture (F1, F1a, F1b) qui agit sur lui dans la direction du maintien de l'ouverture lorsqu'après que l'objet (11) à serrer s'est centré, une ou plusieurs mâchoires de serrage (13, 14) et par leur intermédiaire les leviers coudés (35, 36) qui leur sont associés se bloquent dans leur position sans poursuivre leur déplacement.

20. Dispositif de serrage selon l'une des revendications 15 à 19, **caractérisé en ce que** la force (F2, F2a, F2b) créée par la sollicitation en poussée du piston de serrage (20, 21) respectif dans la direction (flèche 71, 71') associée au serrage dans la direction de serrage (flèche 64, 64') et qui agit sur le dispositif d'entraînement (32, 32a, 32b) en opposition à la force (F1, F1a, F1b) de maintien de l'ouverture est supérieure à la force (F1, F1a, F1b) de maintien de l'ouverture, la différence entre ces forces ayant pour effet de réaliser le serrage dans la direction de serrage (flèche 64, 64').

21. Dispositif de serrage selon l'une des revendications 1 à 20, **caractérisé en ce que** le dispositif d'entraînement (32, 32a, 32b) présente au moins une tringle (44, 44a, 44b) guidée centralement dans le boîtier (12).

22. Dispositif de serrage selon l'une des revendications 1 à 21, **caractérisé en ce que** le dispositif d'entraînement (32, 32a, 32b) présente au moins une pièce (47, 47a, 97, 48, 98) qui s'étend radialement, par exemple un doigt radial, un segment radial, un disque, un piston ou similaires.

23. Dispositif de serrage selon l'une des revendications 1 à 22, **caractérisé en ce que** la ou les butées (33, 34 ou 83, 84) du dispositif d'entraînement (32, 32a, 32b) sont prévues sur la pièce (47, 47a, 97, 48, 98) qui s'étend radialement.

24. Dispositif de serrage selon l'une des revendications 1 à 23, **caractérisé en ce que** vu dans la direction du déplacement, le dispositif d'entraînement présente plusieurs groupes de butées espacées dans la direction axiale.

25. Dispositif de serrage selon l'une des revendications 1 à 24, **caractérisé en ce qu'**au moins deux couronnes espacées dans la direction axiale de pistons de serrage (20, 21) respectifs dotés d'un levier coudé (35, 36), de butées (33, 34, 83, 84) associées du dispositif d'entraînement (32, 32a, 32b) et des mâchoires de serrage (13, 14) sont prévues.

26. Dispositif de serrage selon l'une des revendications 1 à 25, **caractérisé en ce que** le dispositif d'entraînement (32) est divisé en au moins deux groupes individuels (32a, 32b) qui peuvent être en cas de besoin actionnés indépendamment l'un de l'autre.

27. Dispositif de serrage selon la revendication 26, **caractérisé en ce qu'**un groupe (32a) du dispositif d'entraînement présente une tringle creuse (44a) dotée d'une ou de plusieurs pièces (47a, 97) qui s'étendent radialement et de butées (33, 34, 83, 84) prévues sur ces pièces, et **en ce qu'**un deuxième groupe (32b) présente une deuxième tringle (44b) guidée dans la tringle creuse (44a), par exemple par coulissement, et qui présente une ou plusieurs pièces (48, 98) qui s'étendent radialement et plusieurs butées (33, 34, 83, 84) prévues sur ces dernières, les butées du premier groupe (32a) s'étendant sensiblement dans le même plan radial que les butées du deuxième groupe (32b) ou dans un plan radial décalé axialement par rapport au premier.

28. Dispositif de serrage selon l'une des revendications 1 à 27, **caractérisé en ce que** les mâchoires de serrage (13, 14) sont dotées de surfaces intérieures de serrage (15, 16) qui servent au serrage extérieur et/ou de surfaces extérieures de serrage (15', 16') qui servent au serrage intérieur et qui peuvent être déplacées radialement vers l'intérieur ou radialement vers l'extérieur dans leur position respective de serrage extérieur ou de serrage intérieur, et inversement.

29. Dispositif de serrage selon l'une des revendications 1 à 28, **caractérisé en ce que** dans la chambre cylindrique (24, 25) qui lui est respectivement associée, un fluide sous pression peut solliciter chaque piston de serrage (20, 21) dans une direction, dans la direction opposée à la première ou dans les deux directions.

30. Dispositif de serrage selon l'une des revendications 1 à 29, **caractérisé en ce que** chaque levier coudé (35, 36) peut pivoter dans une direction de pivotement (flèche 22) associée au serrage extérieur de la mâchoire de serrage (13, 14) respective et/ou dans une direction de pivotement (flèche 22') opposée à la précédente et associée au serrage intérieur de la mâchoire de serrage (13, 14).

31. Dispositif de serrage selon l'une des revendications 1 à 30, **caractérisé en ce que** le ou les dispositifs d'entraînement (32, 32a, 32b) peuvent coulisser dans une direction de coulissement associée au serrage extérieur des mâchoires de serrage (13, 14) et/ou dans une direction de coulissement opposée à la première et associée au serrage intérieur des mâchoires de serrage (13, 14), et de préférence chaque fois en opposition à l'action d'une force (F1, F1a, F1b) de maintien de l'ouverture qui agit sur le dispositif d'entraînement (32, 32a, 32b).
